# EUROPÄISCHE PATENTSCHRIFT

(11) **EP 2 590 185 B1**
(45) Veröffentlichungstag und Bekanntmachung des Hinweises auf die Patenterteilung: **02.04.2014**
(21) Anmeldenummer: 11008721.0
(22) Anmeldetag: 02.11.2011
(51) Int. Cl.: H01F 27/00

(54) **Hochspannungstransformatormodul**
High voltage transformer module
Module de transformateur haute tension

(43) Veröffentlichungstag der Anmeldung: 08.05.2013
(73) Patentinhaber: ABB Technology AG, 8050 Zürich (CH)
(72) Erfinder: Steiger, Matthias, 06808 Bitterfeld-Wolfen, OT Holzweißig (DE); Schulze, Guido, 39517 Groß-Schwarzlosen (DE); Szczechowski, Janusz, 04229 Leipzig (DE)
(74) Vertreter: Kock, Ina

(56) Entgegenhaltungen:
- EP-A1- 2 133 889
- US-A- 5 171 113
- US-A1- 2009 242 552

## Beschreibung

Die Erfindung betrifft ein Hochspannungstransformatormodul, umfassend einen Transformatorkern mit wenigstens einer Wicklung und ein elektrisches Energiesystem mit einem Hochspannungstransformatormodul.

Es ist allgemein bekannt, dass Hochspannungstransformatoren, beispielsweise in einem Spannungsbereich von 110kV oder 380kV und in einem Leistungsbereich von 100MVA und höher, sowohl zu Revisionszwecken als auch nach Abschluss von eventuellen Wartungs- oder Reparaturarbeiten aber auch direkt nach ihrer Fabrikation intensiv zu prüfen sind, um deren einwandfreie Funktion für den nächsten Betriebszeitraum sicher zu stellen, was oftmals eine Vielzahl an Jahren ist. Es sind sowohl stationäre als auch mobile Prüffelder im Einsatz. Letztere werden insbesondere für eine Vor- Ort- Prüfung von Transformatoren aufgebaut, danach abgebaut und zu einem nächsten Einsatzort transportiert. Auch wenn der Transport und Aufbau eines mobilen Prüffeldes zumeist mit einem sehr hohen Aufwand verbunden ist, so ist dieser dennoch zumeist geringer, als der Aufwand, einen Transformator mit einem Gewicht von beispielsweise 200t zu einem stationären Prüffeld zu transportieren. In vorteilhafter Weise ist zudem dann die Ausfallzeit eines in Prüfung befindlichen Transformators deutlich reduziert.

Hierbei kommen sowohl DC als auch AC Prüffelder zum Einsatz, mit welchen die entsprechenden Prüfbedingungen hergestellt werden können. Insbesondere AC nung auf ein für die Prüfung benötigtes Spannungsniveau zu konvertieren oder aber auch, um die Spannung der zur Verfügung stehenden Einspeisung an die Wechselrichter anzupassen.

Ein derartiger Transformator ist aufgrund der hohen benötigten maximalen Prüfleistung - beispielsweise 20MVA und höher - eine Komponente von erheblicher Größe und erheblichem Gewicht, beispielsweise 15t. Der Transport eines solchen Transformators erfolgt in nachteiliger Weise als Sondertransport, beispielsweise auf einem Tieflader, und ist damit besonders zeit- und aufwandsintensiv. Auch der Aufbau, die Montage und Inbetriebnahme eines derartigen Prüftransformators vor Ort ist mit einem erheblichen zeitlichen und logistischen Aufwand verbunden.

*Die* EP 2133889A1 *offenbart ein mobiles Prüfsystem, welches in einem Container angeordnet ist. Die* US 5171113 A *offenbart eine Verfahreinheit für Container und die* US 2009/242552 A 1 *einen leichtgewichtigen begehbaren Container.*

Ausgehend von diesem Stand der Technik ist es Aufgabe der Erfindung, einen Hochspannungstransformator beziehungsweise ein entsprechendes elektrisches Energiesystem anzugeben, welche besonders einfach zu transportieren und vor Ort aufzustellen ist.

Diese Aufgabe wird gelöst durch ein Hochspannungstransformatormodul der eingangs genannten Art. Dieses ist dadurch gekennzeichnet, dass der Transformatorkern fest in eine mechanische Tragestruktur mit vier oberen und vier unteren quaderförmig angeordneten Eckpunkten integriert ist, wobei die Eckpunkte jeweils als Lastabtragpunkte ausgeführt und entsprechend den Abmessungen eines CSC Containers angeordnet sind.

Die Grundidee der Erfindung beruht einerseits darin, ein Prüffeldsystem für Hochspannungstransformatoren aus möglichst wenigen und standardisierten Modulen aufzubauen, welche einfach zu transportieren sind und vor Ort beispielsweise durch entsprechende elektrische Steckverbindungen einfach zu einem kompletten Prüffeldsystem verschaltet werden können. Um den Transport eines Hochspannungstransformatormoduls, welches als wesentliche Komponente eines Prüffeldsystems anzusehen ist, zu vereinfachen, sind die Eckpunkte der Tragestruktur an das standardisierte Rastermaß der Eckpunkte von Standardcontainern nach CSC (International Convention for Save Containers) angepasst. CSC Container haben beispielsweise standardisierte Abmessungen von in der Breite 2,438m, in der Höhe 2,591 m und in der Länge 6,058m beziehungsweise 12,192m. Die acht Eckpunkte eines Containers formatormoduls, welches als wesentliche Komponente eines Prüffeldsystems anzusehen ist, zu vereinfachen, sind die Eckpunkte der Tragestruktur an das standardisierte Rastermaß der Eckpunkte von Standardcontainern nach CSC (International Convention for Save Containers) angepasst. CSC Container haben beispielsweise standardisierte Abmessungen von in der Breite 2,438m, in der Höhe 2,591m und in der Länge 6,058m beziehungsweise 12,192m. Die acht Eckpunkte eines Containers sind gleichzeitig seine Belastungspunkte, über welche die Gewichtskräfte nach unten abgetragen werden beziehungsweise Gewichtskräfte von darüber befindlichen Containern aufgenommen.

Die mechanische Tragestruktur ist beispielsweise als Gestell aus Edelstahlrohrprofilen geeigneter Querschnitte realisiert, wobei der Transformator dann in einer bevorzugten Variante mittig angeordnet sein kann. Der Transformator kann sowohl in ein an sich bereits tragendes Gestell integriert sein, beispielsweise indem er auf dafür vorgesehenen Auflagepunkten des Gestells mittels Schraub- oder Klemmverbindungen befestigt ist. Es ist aber auch möglich, insbesondere wenn die Größe des Transformators nahe an die Größe eines Containers herankommt, das dann eher klein ausfallende Gestell als integralen Teil des Transformators selbst auszuführen.

Somit lässt sich ein erfindungsgemäßes Hochspannungstransformatormodul wie ein Standardcontainer in einen beliebigen Containerstapel integrieren und zusammen mit diesem beispielsweise auf einem Schiff transportieren. Aber auch die Vielzahl von weiteren Transportmöglichkeiten für Standardcontainer wie beispielsweise Bahn oder LKW erschließt sich in vorteilhafter Weise für ein Hochspannungstransformatormodul, so dass dessen Transport dadurch erheblich vereinfacht wird.

Auch das Aufstellen des Hochspannungstransformatormoduls vor Ort wird durch die mechanische Tragestruktur, in welche der Transformator dauerhaft integriert ist, deutlich vereinfacht. Um einen sicheren Stand zu gewährleisten ist lediglich für ein Abstützen der vier unteren Lastabtragpunkte zu sorgen, beispielsweise durch geeignete Fundamentsegmente aus Beton. Die oberen vier Lastabtragpunkte dienen bei der Montage beispielsweise als Halteösen für das Abseilen durch einen Kran. Die Anordnung des Transformators mit Kern und Wicklung in der Tragestruktur ist daher so auszuführen, dass dessen isolationstechnisch sicherer Betrieb in der Tragestruktur gewährleistet ist, welche ja ein fester Bestandteil des erfindungsgemäßen Hochspannungstransformatormoduls ist. Insbesondere die isolationstechnisch bedingten Mindestabstände zu den elektrischen Anschlüssen des Transformators sind daher einzuhalten. Entsprechend einer Ausführungsvariante des Hochspannungstransformatormoduls ist der Transformator als Trockentransformator für beispielsweise einen Spannungsbereich bis 30kV, 60kV oder auch sogar bis 110kV ausgeführt. Es sind hierbei sowohl 1-phasige, 3-phasige Ausführungen als auch Sonderbauformen wie Potentialtrenner oder dergleichen denkbar.

Gemäß einer weiteren Ausgestaltungsform des erfindungsgemäßen Hochspannungstransformatormoduls sind die Eckpunkte zudem als Standardcontainerecken ausgeführt, weisen also insbesondere entsprechende Bohrungen und einen inneren Hohlraum auf, so dass beispielsweise ein gegenseitiges Verspannen von aneinandergrenzenden Containerecken ermöglicht ist.

Gemäß einer besonders bevorzugten Ausführungsform des erfindungsgemäßen Hochspannungstransformatormoduls sind die von den Eckpunkten aufgespannten Flächen als Wandung ausgebildet, so dass ein containerähnlicher Behälter mit einem Innenraum gebildet ist. Hierdurch ist insbesondere ein Transportschutz für das Hochspannungstransformatormodul gegeben, wodurch dessen Transport weiter vereinfacht ist. Eine derartige Wandung dient aber auch zum Schutz beim Betrieb. Optional ist eine Zugangsmöglichkeit - beispielsweise eine Tür - zum Inneren des containerähnlichen Behälters vorzusehen, um eine Wartung zu ermöglichen. Auch hier ist der Transformator derart auszugestalten und innerhalb des Behälters anzuordnen, dass ein isolationstechnisch sicherer Betrieb bei vorhandenen Wandungen gewährleistet ist. Die elektrischen Anschlüsse des Transformators sind dann mittels geeigneter Durchführungen, beispielsweise durch eine Seitenwandung, nach außen zu führen. Auch eine direkte Durchführung von entsprechend isolierten Kabeln ist möglich, wobei dann vorzugsweise eine jeweils herausziehbare Kabelschlaufe im Behälterinneren vorzuhalten ist.

Um eine völlige Kompatibilität eines erfindungsgemäßen Hochspannungstransformatormoduls mit bestehenden Containertransportsystemen zu gewährleisten, ist der Behälter vorzugsweise als Container entsprechend CSC ausgeführt.

Einer weiteren Erfindungsvariante folgend sind die Wandungen zumindest bereichsweise jeweils doppelwandig ausgeführt. Hierdurch wird die Schutzfunktion der Wandung weiter erhöht, so dass auch bei Beschädigung einer Wandung ein Schutz durch die zweite Wandung gegeben ist.

Erfindungsgemäß ist einer weiteren Variante folgend wenigstens eine Querwandung im Innenraum vorgesehen, durch welche dieser in wenigstens einen ersten und einen zweiten Innenraum geteilt ist, wobei der Transformatorkern mit Wicklung im ersten Innenraum angeordnet ist. Die Teilung des gemeinsamen Innenraums in einen ersten und einen zweiten Innenraum ermöglicht beispielsweise die Integration weiterer Komponenten eines Gesamtsystems in das Hochspannungstransformatormodul, welche dann in vorteilhafter Weise durch die Querwandung vom Transformator getrennt im zweiten Innenraum angeordnet sind. Diese Ausführungsvariante ist jedoch nur bei geringeren Transformatorleistungen möglich, wo noch ein entsprechender Platz im Innenraum des containerähnlichen Behälters zur Verfügung steht.

Einer speziellen Ausführungsvariante folgend sind der gemeinsame Innenraum beziehungsweise der erste Innenraum, wo je nach Variante der Transformator angeordnet ist, hermetisch dicht ausgeführt. Dies ermöglicht nämlich das Füllen des betreffenden Innenraums mit einem Transformatoröl, so dass der darin befindliche Transformator letztendlich als Öltransformator ausgebildet ist. Dies ist aufgrund der Isolatoreigenschaft von Öl insbesondere bei höheren als den zuvor angegebenen Spannungen von Interesse, beispielsweise bei 110kV und höher. Der erste Innenraum dient dann als Transformatorkessel und ist auch entsprechend dem Kessel eines Öltransformators beispielsweise mit Barrieren auszugestalten, wobei dann auch vorzugsweise vor Ort zu montierende Ausleitungen benötigt werden. Ebenso sollte die Befüllung des Kessels mit Öl vorzugsweise vor Ort erfolgen, um so das Transportgewicht nicht zu groß werden zu lassen. Aus Sicherheitsgründen sollte der jeweils mit Öl gefüllte beziehungsweise zu füllende Innenraum von einer Doppelwandung umgeben sein.

Entsprechend einer weiteren Variante des erfindungsgemäßen Hochspannungstransformatormoduls ist innerhalb des Innenraums beziehungsweise des zweiten

Innenraums eine galvanisch mit der wenigstens einen Wicklung des Transformators verbundene elektrische Schaltanlage vorgesehen. Optional ist es aber auch innerhalb des Innenraums beziehungsweise des zweiten Innenraums wenigstens ein galvanisch mit der wenigstens einen Wicklung verbundener Wechsel- und/oder Gleichrichter vorgesehen. Beide Ausführungsformen erschließen sich selbstverständlich nur bei einem noch ausreichenden Platzangebot innerhalb des Containers beziehungsweise containerähnlichen Behälters, also beispielsweise bei einer Transformatorleistung von nur wenigen MVA. Auf diese Weise lassen sich in vorteilhafter Weise weitere Bestandteile eines modularen Gesamtsystems in das Hochspannungstransformatormodul integrieren und die Zahl der benötigten Gesamtmodule somit reduzieren.

Gemäß einer bevorzugten Erfindungsvariante ist innerhalb des Innenraums beziehungsweise des ersten und/oder zweiten Innenraums ein Kühlsystem mit wenigstens einem Wärmeübertrager vorgesehen, wobei fernerhin eine Bewegungsvorrichtung vorgesehen ist, mittels welcher der wenigstens eine Wärmeübertrager von einer Transportposition innerhalb eines der Innenräume in eine zumindest teilweise außerhalb befindliche Arbeitsposition bewegbar ist.

Transformatoren erzeugen in ihrem Betrieb eine elektrische Verlustleistung, welche zu einem Wärmeeintrag in den Container führt. Insbesondere bei Anordnung des Transformators in einem geschlossenen containerähnlichen Behälter führt dies schnell zu einem unzulässig hohen Temperaturanstieg innerhalb des Behälters. Dieser Effekt wird auch durch andere Verlustwärme produzierende Komponenten innerhalb des Behälters unterstützt, insbesondere auch durch Umrichterschränke mit ihrer Leistungselektronik. Deshalb ist die Problematik der Abfuhr von im Betrieb entstehender Verlustwärme von besonderer Bedeutung.

Der erfindungsgemäße Vorteil des Kühlsystems entsprechend dieser Erfindungsvariante liegt in einer besonders platzsparenden und kompakten Anordnung des Wärmetauschers zu Transportzwecken innerhalb des Hochspannungstransformatormoduls, wobei zum Betrieb des Hochspannungstransformatormoduls der Wärmetauscher zumindest teilweise aus diesem herausbewegt ist. Aufgrund der dann erhöhten Kontaktfläche mit der Umgebungsluft ist eine deutlich erhöhte Effizienz des Kühlsystems erreicht. Vorzugsweise ist ein derartiges Kühlsystem als geschlossener Kühlkreislauf mit Kondensator und Verdampfer ausgeführt, wobei der oder auch mehrere Verdampfer durch Verdampfen der Kühlflüssigkeit Wärmeenergie im Inneren des Hochspannungstransformatormoduls aufnehmen und an den heraus bewegbaren Kondensator abgeben. Ein derartiger Kondensator ist beispielsweise im oberen Bereich des Prüffeldmoduls angeordnet und schubladenähnlich aus diesem durch eine jeweilige Öffnung heraus fahrbar. Durch ein auf die Oberfläche des Kondensators gerichtetes Gebläse ist die Effizienz eines derartigen Kühlsystems bedarfsweise noch zu steigern.

Gemäß einer bevorzugten Variante des Hochspannungstransformatormoduls ist in wenigstens einer Wandung wenigstens eine mittels einer Abdeckung verschließbare Aussparung vorgesehen. Die Aussparung dient insbesondere der Durchführung der elektrischen Versorgungsleitungen oder Anschlüsse des Hochspannungstransformatormoduls, so dass diese problemlos elektrisch mit weiteren Modulen eines Gesamtsystems verbindbar ist. Die Abdeckung dient dem Schutz bei einem Transport. Nach der Aufstellung vor Ort ist kein Schutz mehr erforderlich und die Abdeckung kann entfernt werden, so dass die Aussparung offengelegt ist. Durch diese können dann entweder - bedarfsweise unter Verwendung einer dem Fachmann bekannten jeweiligen elektrischen Durchführung - direkt entsprechend isolierte Anschlusskabel geführt werden. Es kann aber auch beispielsweise eine Klemmleiste für entsprechende elektrische Anschlüsse eingesetzt werden, welche während des Transportes im Inneren des Containers gelagert wurde und bereits alle rückwärtigen modulinternen Verbindungen, beispielsweise zum Transformator, aufweist. Auf diese Weise sind sowohl ein sicherer Transport ohne Störkontur an der Anschlussstelle als auch ein einfaches Verschalten des Hochspannungstransformatormoduls mit weiteren Modulen gewährleistet.

Die Aufgabe wird auch gelöst durch ein elektrisches Energiesystem, welches modular aufgebaut ist und wenigstens ein erfindungsgemäßes Hochspannungstransformatormodul umfasst. Wie eingangs erwähnt ermöglicht der modulare Aufbau, vorzugsweise unter Verwendung von Containern oder containerähnlichen Behältern als Gehäuse, einen einfachen Transport und problemlosen Aufbau vor Ort, insbesondere weil die Systemkomponenten in einer festen Position innerhalb des Containers angeordnet sind. In ihrer festen Position sind die Komponenten containerintern bereits fest verschaltet, so dass lediglich noch das Modul als solches zu verschalten ist. Die Modularität ermöglicht zudem ein bedarfsweises elektrisches Zusammenschalten von mehreren standardisierten und containerbasierten Systemmodulen, wie beispielsweise auch Umrichtermodulen, zu einem elektrischen Energiesystem. So ist beispielsweise die Leistung eines modularen elektrischen Energiesystems durch Implementierung weiterer containerbasierter Systemmodule entsprechend steigerbar.

Vorzugsweise ist das modulare elektrische Energiesystem ein Prüffeldsystem für Leistungstransformatoren, ist also dafür vorgesehen, die vorgegebene Spannung einer elektrischen Einspeisung in eine Prüffspannung (ein- oder auch dreiphasig) mit variabler Höhe und Frequenz zu konvertieren. Selbstverständlich ist ein containerbasiertes modulares elektrisches Energiesystem aber auch für andere Anwendungszwecke geeignet, beispielsweise auch als Energiesystem für Windparks beziehungsweise auch Offshore - Windparks. Ein Hochspannungstransformatormodul in seiner Containerausführung mit Transformator und Umrichtern beispielsweise ist ohne weiteres derart konzipierbar, dass es als Umformer / Umrichter für eine Windkraftanlage geeignet ist. Die Aufgabe von einem derartigen Umrichter für Windkraftanlagen ist die Umformung einer erzeugten variablen Spannung in eine definierte Einspeisespannung, und damit letztendlich sehr vergleichbar mit der Aufgabe eines Prüffeldsystems. Die Vorteile eines derart ausgeführten erfindungsgemäßen Hochspannungstransformatormoduls, nämlich seine einfache Transportierbarkeit und Montage vor Ort, ist bei der Errichtung von Windparks ebenfalls von höchster Bedeutung, so dass die Erfindung auch in diesem Bereich vorteilhaft eingesetzt werden kann.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein erstes exemplarisches Hochspannungstransformatormodul,
- Fig. 2: ein zweites exemplarisches Hochspannungstransformatormodul,
- Fig. 3: ein drittes exemplarisches Hochspannungstransformatormodul,
- Fig. 4: eine Stapelung von Hochspannungstransformatormodulen sowie

- Fig. 5: einen vierten Transformatorkern mit Wicklung.

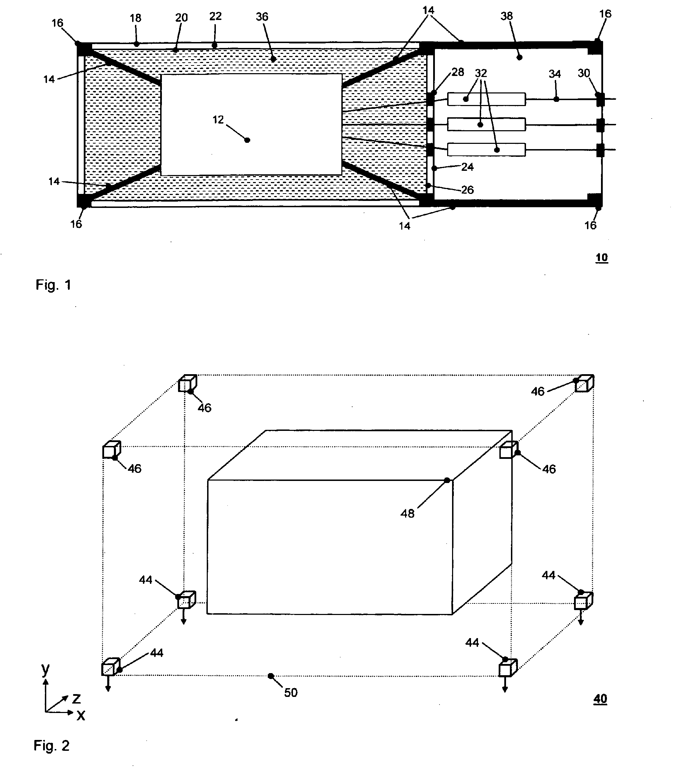

Fig. 1 zeigt ein erstes exemplarisches Hochspannungstransformatormodul 10 in einer Schnittdraufsicht. Ein Transformator 12 ist fest in eine strebenartige mechanische Tragestruktur 14 integriert und wird von dieser getragen. Die Tragestruktur 14 erstreckt sich zu vier unteren Lastabtragpunkten 16 und zu vier weiteren nicht gezeigten oberen Lastabtragpunkten, welche insgesamt in einer Quaderform angeordnet sind. Die Quaderform entspricht den Außenabmessungen eines *12, 992m (40 Fuß)* Standardcontainers, so dass das Hochspannungstransformatormodul 10 sich in einen Stapel mit CSC Containern integrieren lässt.

Die Flächenbereiche zwischen den Lastabtragpunkten sind doppelwandig als Wandungen 18, 20 ausgeprägt, so dass ein containerähnlicher Behälter mit Innenraum gebildet ist. Es ist fernerhin zwischen den Seitenwandungen eine doppelwandige innere Querwandung 24, 26 vorgesehen, so dass ein doppelwandig umhüllter hermetisch dichter erster Innenraum 36 und ein daran angrenzender zweiter Innenraum 38 gebildet sind. Der erste doppelwandig umhüllte Innenraum 36, in welchem der Transformator 12 angeordnet ist, ist ölgefüllt und im zweiten Innenraum 38 ist eine dreiphasige elektrische Schaltanlage 32 angeordnet. Diese ist über galvanische Verbindungsleiter 34 mit dem Transformator 12 verbunden, wobei diese mittels hermetisch dichtender Durchführungen 28 durch die innere Querwandung 24, 26 in den ersten ölgefüllten Innenraum 36 geführt sind. Die Durchführungen entsprechen von ihrer Ausführungen dem Fachmann bekannten Durchführungen. Die Schaltanlage 32 ist weiterhin mittels dreier galvanischer Verbindungsleiter 34 mit einem außerhalb des containerähnlichen Behälters liegenden weiteren Containermodul verbunden, wobei diese Leiter durch entsprechende Durchführungen an der äußeren Stirnwand geführt sind.

Fig. 2 zeigt ein zweites exemplarisches Hochspannungstransformatormodul 40 in einer dreidimensionalen Prinzipskizze, in welcher aus Übersichtsgründen auf die Darstellung von einer mechanischen Tragestruktur verzichtet wurde. Vier untere 44 und vier obere 46 Lastabtragpunkte bilden die Eckpunkte eines gestrichelt angedeuteten quaderförmigen containerähnlichen Behälters 50, welcher die Abmessungen eines Standardcontainers aufweist. Die als würfelförmig angedeuteten Lastabtragpunkte 44, 46 sind aus Gusseisen ausgeführt und weisen an ihren drei außen liegenden Seiten jeweilige Bohrungen auf, welche in einen inneren Hohlraum des jeweiligen Würfels münden. Somit lassen sich aneinander grenzende Containerecken jeweils gut an den Bohrungen miteinander verbinden, beispielsweise zu Sicherungszwecken während eines Transportes. Mittig innerhalb des containerähnlichen Behälters 50 angeordnet und von der nicht gezeigten Tragestruktur gehalten ist ein Transformator 48 gezeigt. Dieser ist in diesem Beispiel ein Trockentransformator mit einer Nennspannung im Bereich von 60kV und einer Nennleistung von 20MVA, wobei dies nur Beispielwerte darstellen. Die seitlichen Containerwandungen sind aus gewelltem Stahlblech gefertigt. Es ist ohne weiteres auch möglich, mehrere Transformatoren in einer gemeinsamen mechanischen Tragestruktur anzuordnen.

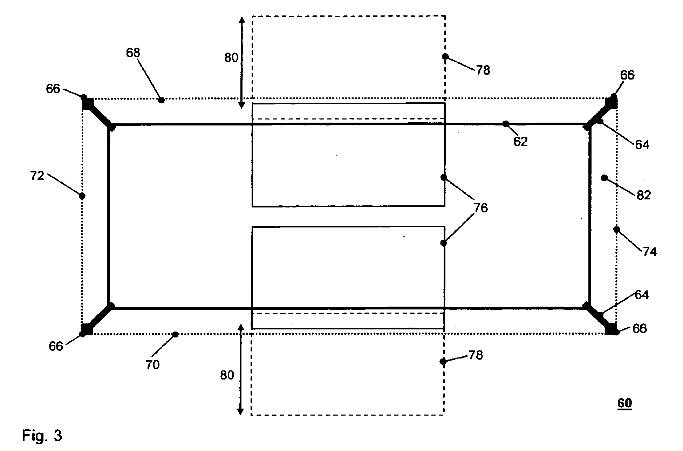

Fig. 3 zeigt ein drittes exemplarisches Hochspannungstransformatormodul 60 in einer Schnittdraufsicht. Ein als Quader angedeuteter Trockentransformator 62, ist mittig in einem Container angeordnet, wobei der Container mit seinen Seitenwandungen 68, 70 und seinen Stirnwandungen 72, 74 dargestellt ist und wobei durch die Containerwandungen ein Innenraum 82 gebildet ist. Der Transformator 62 ist integraler Bestandteil einer mechanischen Tragestruktur 64, welche insbesondere durch an den jeweiligen Eckpunkten des quaderförmig angedeuteten Transformators 62 abgehende Hohlprofilverbindungen angedeutet ist, welche in jeweiligen Lastabtragpunkte 66 übergehen. Oberhalb des Transformators 62 aber innerhalb des Containers sind zwei schubladenähnlich ausgeprägte Wärmeübertrager in einer Transportposition 76 angedeutet, welche mittels einer nicht gezeigten Bewegungsvorrichtung längs der Bewegungsrichtung 80 in eine Arbeitsposition 78 bewegbar sind. Die Wärmeübertrager sind Teil eines integrierten Kühlsystems des Hochspannungstransformatormoduls, um die im Betrieb des Transformators anfallende Verlustwärme abzutransportieren. Als besonders effektiv erweist sich ein Kühlsystem mit geschlossenem Kühlkreislauf, umlaufenden Kühlmedium, Kondensator und Verdampfer, was dem Fachmann als solches jedoch bekannt ist.

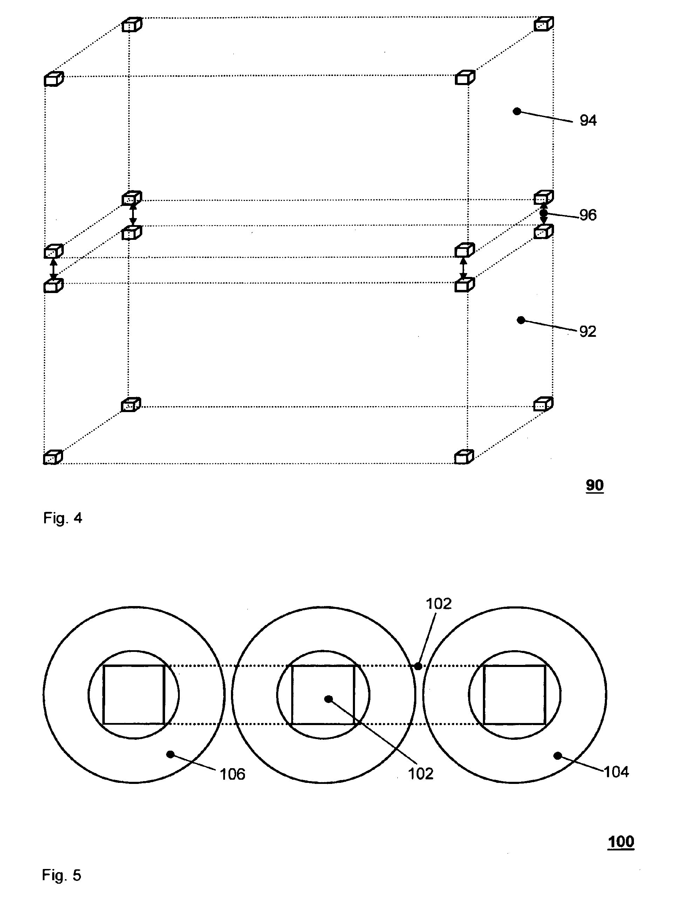

Fig. 4 zeigt eine Stapelung 90 von zwei Hochspannungstransformatormodulen 92, 94, wobei die jeweiligen Gewichtskräfte über die an den jeweiligen Eckpunkten befindlichen Lastabtragpunkte abgetragen werden. Eine derartige Stapelung tritt beispielsweise bei einem Schiffstransport auf. Es ist aber auch ohne weiteres möglich, sofern es die Platzverhältnisse vor Ort zulassen, mehrere zu einem elektrischen Energiesystem oder auch Prüfsystem zusammen geschaltete Containermodule für deren Betrieb derart gestapelt anzuordnen.

Fig. 5 zeigt einen vierten Transformatorkern 102 mit Wicklung 104, 106 in einer Darstellung 100. In den anderen Figs. ist ein entsprechender Transformatorkern mit Wicklung jeweils als Quader angedeutet worden, wohingegen dies ein realistischeres Darstellungsbeispiel ist. Es ist allerdings auch weite Spannbreite von weiteren Bauformen möglich, wie Übertrager, Spartransformatoren, einphasige Ausführungen.

### Bezugszeichenliste

- 10: erstes exemplarisches Hochspannungstransformatormodul
- 12: erster Transformatorkern mit Wicklung
- 14: erste mechanische Tragestruktur
- 16: Lastabtragpunkte
- 18: äußere Wandung
- 20: innere Wandung
- 22: Hohlraum zwischen äußerer und innerer Wandung
- 24: äußere Querwandung
- 26: innere Querwandung
- 28: innere Durchführung
- 30: äußere Durchführung
- 32: elektrische Schaltanlage
- 34: galvanische Verbindung
- 36: mit Öl gefüllter erster Innenraum
- 38: zweiter Innenraum
- 40: zweites exemplarisches Hochspannungstransformatormodul
- 44: untere Lastabtragpunkte
- 46: obere Lastabtragpunkte
- 48: zweiter Transformatorkern mit Wicklung
- 50: containerähnlicher Behälter
- 60: drittes exemplarisches Hochspannungstransformatormodul
- 62: dritter Transformatorkern mit Wicklung
- 64: zweite mechanische Tragestruktur
- 66: Lastabtragpunkte
- 68: erste Seitenwandung
- 70: zweite Seitenwandung
- 72: erste Stirnwandung
- 74: zweite Stirnwandung
- 76: Wärmeübertrager in Transportposition
- 78: Wärmeübertrager in Arbeitsposition
- 80: Bewegungsrichtung
- 82: Innenraum
- 90: Stapelung von Hochspannungstransformatormodulen
- 92: erstes Hochspannungstransformatormodul
- 94: zweites Hochspannungstransformatormodul
- 96: Kraftübertragung an Lastabtragpunkten
- 100: vierter Transformatorkern mit Wicklung
- 102: Transformatorkern
- 104: erste Wicklung
- 106: zweite Wicklung

## Patentansprüche

1. Hochspannungstransformatormodul (10, 40, 60, 92, 94), umfassend einen Transformatorkern mit wenigstens einer Wicklung (12, 48, 62, 100), **dadurch gekennzeichnet,**
**dass** der Transformatorkern (102) fest in eine mechanische Tragestruktur mit *vier oberen und vier unteren* quaderförmig angeordneten Eckpunkten integriert ist, wobei die Eckpunkte *jeweils* als Lastabtragpunkte (16, 44, 46, 66) ausgeführt und entsprechend den Abmessungen eines CSC Containers angeordnet sind.

2. Hochspannungstransformatormodul nach Anspruch 1, **dadurch gekennzeichnet, dass** die Eckpunkte als Standardcontainerecken ausgeführt sind.

3. Hochspannungstransformatormodul nach Anspruch 2, **dadurch gekennzeichnet, dass** die von den Eckpunkten aufgespannten Flächen jeweils als Wandung (18, 68, 70, 72, 74) ausgebildet sind, so dass ein containerähnlicher Behälter (50) mit einem Innenraum (82) gebildet ist.

4. Hochspannungstransformatormodul nach Anspruch 3, **dadurch gekennzeichnet, dass** der containerähnliche Behälter (50) als Container entsprechend CSC ausgeführt ist.

5. Hochspannungstransformatormodul nach einem der Ansprüche 3 oder 4, **dadurch gekennzeichnet, dass** die Wandungen (18, 68, 70, 72, 74) zumindest bereichsweise jeweils doppelwandig (18 - 20) ausgeführt sind.

6. Hochspannungstransformatormodul nach einem der Ansprüche 3 bis 5, **dadurch gekennzeichnet, dass** im Innenraum (82) wenigstens eine Querwandung (24, 26) vorgesehen ist, durch welche dieser (82) in wenigstens einen ersten (36) und einen zweiten (38) Innenraum geteilt ist, wobei der Transformatorkern mit Wicklung (12, 48, 62, 100) im ersten Innenraum (36) angeordnet ist.

7. Hochspannungstransformatormodul nach einem der Ansprüche 3 bis 6, **dadurch gekennzeichnet, dass** der Innenraum (82) oder der erste Innenraum (36) hermetisch dicht ausgeführt sind.

8. Hochspannungstransformatormodul nach Anspruch 7, **dadurch gekennzeichnet, dass** der Innenraum (82) oder der erste Innenraum (36) mit einem Öl gefüllt ist.

9. Hochspannungstransformatormodul nach einem der Ansprüche 3 bis 8, **dadurch gekennzeichnet, dass** innerhalb des Innenraums (82) beziehungsweise des zweiten Innenraums (38) eine galvanisch mit der wenigstens einen Wicklung (102, 104) verbundene (34) elektrische Schaltanlage (32) vorgesehen ist.

10. Hochspannungstransformatormodul nach einem der Ansprüche 3 bis 9, **dadurch gekennzeichnet, dass** innerhalb des Innenraums (82) beziehungsweise des zweiten Innenraums (38) wenigstens ein galvanisch mit der wenigstens einen Wicklung (102, 104) verbundener (34) Wechsel- und/oder Gleichrichter vorgesehen ist.

11. Hochspannungstransformatormodul nach einem der Ansprüche 3 bis 10, **dadurch gekennzeichnet, dass** innerhalb des Innenraums (82) beziehungsweise des ersten und/oder zweiten Innenraums (38) ein Kühlsystem mit wenigstens einem Wärmeübertrager (76) vorgesehen ist, wobei fernerhin eine Bewegungsvorrichtung vorgesehen ist, mittels welcher der wenigstens eine Wärmeübertrager (76) von einer Transportposition innerhalb eines der Innenräume (38, 82) in eine zumindest teilweise außerhalb befindliche Arbeitsposition (78) bewegbar (80) ist.

12. Hochspannungstransformatormodul nach einem der Ansprüche 3 bis 11, **dadurch gekennzeichnet, dass** in wenigstens einer Wandung (18, 20, 24, 26, 68, 70, 72, 74) wenigstens eine mittels einer Abdeckung verschließbare Aussparung vorgesehen ist.

13. Hochspannungstransformatormodul nach Anspruch 12, **dadurch gekennzeichnet, dass** durch die wenigstens eine Aussparung eine elektrische Durchführung (28, 30) in einen Innenraum (36, 38, 82) angeordnet ist.

14. Elektrisches Energiesystem, **dadurch gekennzeichnet, dass** dieses modular aufgebaut ist und wenigstens ein Hochspannungstransformatormodul nach einem der Ansprüche 1 bis 13 umfasst.

15. Elektrisches Energiesystem nach Anspruch 14, **dadurch gekennzeichnet, dass** dieses ein Prüffeldsystemen für Leistungstransformatoren ist.

## Claims

1. High-voltage transformer module (10, 40, 60, 92, 94), comprising a transformer core having at least one winding (12, 48, 62, 100), **characterized in that** the transformer core (102) is fixedly integrated in a mechanical supporting structure having four upper and four lower corner points arranged in the form of a square, wherein the corner points are each in the form of load transfer points (16, 44, 46, 66) and are arranged corresponding to the dimensions of a CSC container.

2. High-voltage transformer module according to Claim 1, **characterized in that** the corner points are in the form of standard container corners.

3. High-voltage transformer module according to Claim 2, **characterized in that** the areas spanned by the corner points are each in the form of a wall (18, 68, 70, 72, 74), with the result that a container-like receptacle (50) with an interior (82) is formed.

4. High-voltage transformer module according to Claim 3, **characterized in that** the container-like receptacle (50) is in the form of a container adhering to CSC.

5. High-voltage transformer module according to either of Claims 3 and 4, **characterized in that** the walls (18, 68, 70, 72, 74) are each formed at least regionally as double walls (18-20).

6. High-voltage transformer module according to one of Claims 3 to 5, **characterized in that** at least one transverse wall (24, 26) is provided in the interior (82), by means of which transverse wall said interior (82) is divided into at least one first interior (36) and one second interior (38), wherein the transformer core with the winding (12, 48, 62, 100) is arranged in the first interior (36).

7. High-voltage transformer module according to one of Claims 3 to 6, **characterized in that** the interior (82) or the first interior (36) is hermetically sealed.

8. High-voltage transformer module according to Claim 7, **characterized in that** the interior (82) or the first interior (36) is filled with an oil.

9. High-voltage transformer module according to one of Claims 3 to 8, **characterized in that** an electrical switchgear assembly (32), which is connected (34) galvanically to the at least one winding (102, 104), is provided within the interior (82) or the second interior (38).

10. High-voltage transformer module according to one of Claims 3 to 9, **characterized in that** at least one inverter and/or rectifier, which is connected (34) galvanically to the at least one winding (102, 104), is provided within the interior (82) or the second interior (38).

11. High-voltage transformer module according to one of Claims 3 to 10, **characterized in that** a cooling system comprising at least one heat exchanger (76) is provided within the interior (82) or the first and/or second interior (38), wherein, furthermore, a movement apparatus is provided, by means of which the at least one heat exchanger (76) is movable (80) from a transport position within one of the interiors (38, 82) into a working position (78) which is located at least partially outside.

12. High-voltage transformer module according to one of Claims 3 to 11, **characterized in that** at least one cutout, which can be closed by means of a cover, is provided in at least one wall (18, 20, 24, 26, 68, 70, 72, 74).

13. High-voltage transformer module according to Claim 12, **characterized in that** an electrical bushing (28, 30) is arranged in an interior (36, 38, 82) through the at least one cutout.

14. Electrical energy system, **characterized in that** said electrical energy system has a modular design and comprises at least one high-voltage transformer module according to one of Claims 1 to 13.

15. Electrical energy system according to Claim 14, **characterized in that** said electrical energy system is a testing station system for power transformers.

## Revendications

1. Module transformateur à haute tension (10, 40, 60, 92, 94), comprenant un noyau de transformateur comprenant au moins un enroulement (12, 48, 62, 100), **caractérisé en ce**
**que** le noyau de transformateur (102) est intégré à demeure dans une structure porteuse mécanique comprenant quatre points d'angle supérieurs et quatre points d'angle inférieurs disposés en forme de parallélépipède, les points d'angle étant respectivement réalisés en tant que points de transmission des charges (16, 44, 46, 66) et étant disposés conformément aux dimensions d'un conteneur CSC.

2. Module transformateur à haute tension selon la revendication 1, **caractérisé en ce que** les points d'angle sont réalisés sous la forme de coins de conteneur standard.

3. Module transformateur à haute tension selon la revendication 2, **caractérisé en ce que** les surfaces qui s'étendent entre les points d'angle sont respectivement réalisées sous forme de paroi (18, 68, 70, 72, 74) de manière à former un récipient (50) similaire à un conteneur avec un espace intérieur (82).

4. Module transformateur à haute tension selon la revendication 3, **caractérisé en ce que** le récipient (50) similaire à un conteneur est réalisé sous la forme d'un conteneur conformément à la CSC.

5. Module transformateur à haute tension selon l'une des revendications 3 ou 4, **caractérisé en ce que** les parois (18, 68, 70, 72, 74) sont à chaque fois réalisées à double paroi (18-20), au moins dans certaines zones.

6. Module transformateur à haute tension selon l'une des revendications 3 à 5, **caractérisé en ce qu'**au moins une paroi transversale (24, 26) est prévue dans l'espace intérieur (82), par laquelle celui-ci (82) est divisé en au moins un premier (36) et un deuxième (38) espace intérieur, le noyau de transformateur muni d'un enroulement (12, 48, 62, 100) étant disposé dans le premier espace intérieur (36).

7. Module transformateur à haute tension selon l'une des revendications 3 à 6, **caractérisé en ce que** l'espace intérieur (82) ou le premier espace intérieur (36) sont réalisés à fermeture hermétique.

8. Module transformateur à haute tension selon la revendication 7, **caractérisé en ce que** l'espace intérieur (82) ou le premier espace intérieur (36) est rempli avec une huile.

9. Module transformateur à haute tension selon l'une des revendications 3 à 8, **caractérisé en ce qu'**un équipement de commutation (32) électrique relié (34) galvaniquement avec l'au moins un enroulement (102, 104) est prévu à l'intérieur de l'espace intérieur (82) ou du deuxième espace intérieur (38).

10. Module transformateur à haute tension selon l'une des revendications 3 à 9, **caractérisé en ce qu'**au moins un onduleur et/ou un redresseur relié (34) galvaniquement avec l'au moins un enroulement (102, 104) est prévu à l'intérieur de l'espace intérieur (82) ou du deuxième espace intérieur (38).

11. Module transformateur à haute tension selon l'une des revendications 3 à 10, **caractérisé en ce qu'**à l'intérieur de l'espace intérieur (82) ou du premier et/ou deuxième espace intérieur (38) est prévu un système de refroidissement comprenant au moins un échangeur de chaleur (76), un dispositif de déplacement étant en outre prévu, au moyen duquel l'au moins un échangeur de chaleur (76) peut être déplacé (80) d'une position de transport à l'intérieur de l'un des espaces intérieurs (38, 82) en une position de travail (78) qui se trouve au moins partiellement à l'extérieur.

12. Module transformateur à haute tension selon l'une des revendications 3 à 11, **caractérisé en ce que** dans au moins une paroi (18, 20, 24, 26, 68, 70, 72, 74) est prévu au moins un évidement qui peut être fermé au moyen d'un capotage.

13. Module transformateur à haute tension selon la revendication 12, **caractérisé en ce qu'**une traversée électrique (28, 30) dans un espace intérieur (36, 38, 82) est disposée à travers l'au moins un évidement.

14. Système d'énergie électrique, **caractérisé en ce que** celui-ci est de construction modulaire et comprend au moins un module transformateur à haute tension selon l'une des revendications 1 à 13.

15. Système d'énergie électrique selon la revendication 14, **caractérisé en ce que** celui-ci est un système de banc d'essai pour des transformateurs de puissance.
